# DEMANDE DE BREVET EUROPEEN

(11) **EP 1 061 224 A1**
(43) Date de publication de la demande: **20.12.2000**
(21) Numéro de dépôt: 00420125.7
(22) Date de dépôt: 13.06.2000
(51) Int. Cl.: E05F 1/12, A47J 36/12

(54) **Dispositif de relevage du couvercle d'un appareil électrique de cuisson a couvercle pivotant, et appareil électrique de cuisson comportant un tel dispositif**

(30) Priorité: 15.06.1999 FR 9907789
(71) Demandeur: SEB S.A., 69130 Ecully (FR)
(72) Inventeur: Bizard, Jean-Claude, 21121 Fontaine les Dijon (FR)
(74) Mandataire: Kiehl, Hubert

(57) **Abrégé**

- L'invention concerne un dispositif d'assistance au relevage d'un couvercle (1) articulé au moyen d'au moins une charnière (3) sur un corps (2) appartenant à un appareil électrique de cuisson, comportant au moins un ressort de rappel (4) comprenant une partie hélicoïdale (5) prolongée par une première branche (6) montée dans le couvercle (1) et par une deuxième branche (7) montée dans le corps (2), la partie hélicoïdale (5) étant montée sur un pivot (8) formant un axe de rotation distinct de l'axe de rotation de la charnière (3), le pivot (8) étant solidaire du couvercle (1), respectivement du corps, la branche (7) montée dans le corps (2), respectivement dans le couvercle, étant montée en appui mobile.
- Conformément à l'invention, la branche (7) montée mobile comporte un moyen d'accrochage (42) prévu pour venir en prise avec une butée (28) ménagée dans le corps (2), respectivement dans le couvercle.

## Description

La présente invention concerne le domaine technique général des appareils électriques de cuisson. La présente invention se rapporte plus particulièrement aux appareils comportant une enceinte de cuisson disposée dans un boîtier fermé par un couvercle monté sur une charnière. La présente invention concerne par exemple les friteuses ou encore les cuiseurs électriques tels que notamment les cuiseurs à riz.

Dans les appareils du type précité, il est connu d'associer à la charnière du couvercle un ressort de rappel. De tels appareils comportent également un moyen de retenue du couvercle en position abaissée. Le ressort de rappel permet d'obtenir le relevage du couvercle lorsque l'utilisateur libère le couvercle en actionnant le moyen de retenue. Cette disposition permet à l'utilisateur d'éviter une manipulation directe du couvercle lorsque la cuisson est terminée, le moyen de retenue étant généralement disposé sur le boîtier de l'appareil. Cette disposition permet également de maintenir le couvercle dans une position relevée, sans risque que le couvercle retombe en position fermée.

Le document GB 2 281 939 décrit une charnière de couvercle d'appareil de cuisson associée à un ressort de rappel hélicoïdal monté en torsion. La partie centrale du ressort est montée autour d'une tige formant l'axe de rotation de la charnière. L'une des branches du ressort est montée dans le couvercle et l'autre branche du ressort est montée dans le boîtier. Une telle construction permet d'obtenir les avantages précités. De plus, une vis de réglage permet d'ajuster la force du ressort en modifiant la position de la branche du ressort montée dans le boîtier. Toutefois cette vis permet seulement de réaliser un réglage statique de la force du ressort.

Lorsque le couvercle occupe une position relevée, sans pour autant atteindre ou dépasser la position verticale, le ressort doit exercer un couple de rappel résiduel pour appliquer un effort s'opposant au poids du couvercle. Lorsque le couvercle est bloqué en position fermée, généralement horizontale, le couple de rappel exercé par le ressort est plus important. De ce fait, si le ressort de rappel confère au couvercle une vitesse trop importante lorsque le couvercle arrive en butée, il y a un risque de déstabilisation de l'appareil.

Le document DE 31 29 285 divulgue un dispositif d'assistance au relevage d'un couvercle articulé au moyen de charnières sur corps formant un récipient. Le dispositif comporte un ressort de rappel comportant une partie hélicoïdale prolongée par une première branche montée dans le couvercle et par une deuxième branche montée dans le corps. La partie hélicoïdale est montée sur un pivot formant un axe de rotation distinct de l'axe de rotation de la charnière. Le pivot est solidaire du corps et la branche du ressort montée dans le couvercle est montée en appui mobile.

Ce document ne divulgue pas de moyens permettant de contrôler la position relevée du couvercle.

Le but de l'invention est de proposer un dispositif d'assistance au relevage d'un couvercle articulé d'un appareil électrique de cuisson, qui permette de remédier à l'inconvénient précité.

Un autre but de l'invention est de proposer un dispositif d'assistance au relevage d'un couvercle articulé d'appareil électrique de cuisson, dans lequel le montage du ressort de rappel est facilité.

Un autre but de l'invention est de proposer un dispositif d'assistance au relevage d'un couvercle articulé d'appareil électrique de cuisson, dans lequel la remontée du couvercle est amortie.

Les objets assignés à l'invention sont atteints avec un dispositif d'assistance au relevage d'un couvercle articulé au moyen d'au moins une charnière sur un corps appartenant à un appareil électrique de cuisson, comportant au moins un ressort de rappel comprenant une partie hélicoïdale prolongée par une première branche montée dans le couvercle et par une deuxième branche montée dans le corps, la partie hélicoïdale étant montée sur un pivot formant un axe de rotation distinct de l'axe de rotation de la charnière, le pivot étant solidaire du couvercle, respectivement du corps, la branche montée dans le corps, respectivement la branche montée dans le couvercle, étant alors montée en appui mobile, dans lequel la branche montée mobile dans le corps, respectivement dans le couvercle, comporte un moyen d'accrochage prévu pour venir en prise avec une butée ménagée dans le corps, respectivement dans le couvercle. Une telle construction est d'une réalisation simple et permet de limiter la course du couvercle. Une telle disposition permet également de s'affranchir de la variation linéaire du couple de rappel exercé par un ressort de rappel disposé sur l'axe de la charnière. Une telle disposition permet d'obtenir une plus grande latitude de variation pour le couple de rappel exercé par le ressort et permet de limiter les risques de déstabilisation de l'appareil lors du relevage du couvercle.

Selon un mode de réalisation avantageux, le pivot et la charnière forment deux axes de rotation sensiblement parallèles. Une telle disposition permet d'obtenir un dispositif de construction simple.

Selon un mode de réalisation avantageux, le corps est une pièce susceptible d'être mise en place de manière amovible dans un logement ménagé dans un boîtier de l'appareil. Une telle disposition permet de retirer le couvercle monté sur le corps du boîtier de l'appareil.

Selon une autre caractéristique avantageuse, le ressort comporte deux parties hélicoïdales espacées et les branches fixes montées dans le couvercle, respectivement dans le corps, se rejoignent pour former un bras de liaison. Cette disposition facilite le montage du ressort.

Selon une autre caractéristique avantageuse, la charnière est formée par un tenon issu du couvercle, respectivement du corps, pivotant dans un logement cylindrique, une découpe étant prévue dans ledit logement pour l'insertion dudit tenon selon une direction perpendiculaire à l'axe de rotation de ladite charnière. Une telle disposition simplifie le montage du couvercle sur le corps.

Selon une variante de réalisation, le pivot appartient au couvercle et est issu d'une paroi sensiblement perpendiculaire à la face inférieure du couvercle. Le pivot peut alors être obtenu par moulage avec la face inférieure du couvercle lorsque cette face est réalisée en matière plastique.

Selon une variante de réalisation, la branche mobile du ressort, montée mobile dans le corps, respectivement dans le couvercle, coopère avec un dispositif de freinage, monté dans le corps, respectivement dans le couvercle. Cette disposition permet de mieux contrôler le relevage du couvercle tout en s'affranchissant des problèmes liés à la dispersion des caractéristiques mécaniques des ressorts.

Avantageusement alors, le dispositif de freinage est monté dans le corps entre une paroi et une nervure dont l'extrémité inférieure forme la butée. Cette disposition permet de simplifier la construction de l'appareil.

Selon un mode de réalisation, le dispositif de freinage est formé par un frein à graisse.

Les objets assignés à l'invention sont également atteints avec un appareil électrique de cuisson comportant un couvercle articulé sur un corps au moyen d'une charnière et équipé d'un tel dispositif.

L'invention sera mieux comprise à l'étude d'exemples de réalisation pris à titre nullement limitatifs et illustrés dans les figures annexées dans lesquelles :
- la figure 1 est une vue partielle de côté en coupe d'un premier exemple de réalisation d'un appareil comportant le dispositif selon l'invention, le couvercle étant en position abaissée,
- la figure 2 est une vue partielle de côté en coupe de l'exemple de réalisation montré à la figure 1, le couvercle étant en position relevée,
- la figure 3 est une vue partielle en perspective d'un deuxième exemple de réalisation d'un appareil comportant le dispositif selon l'invention,
- la figure 4 est une vue partielle de côté en coupe d'un troisième exemple de réalisation d'un appareil comportant le dispositif selon l'invention, le couvercle étant en position relevée.

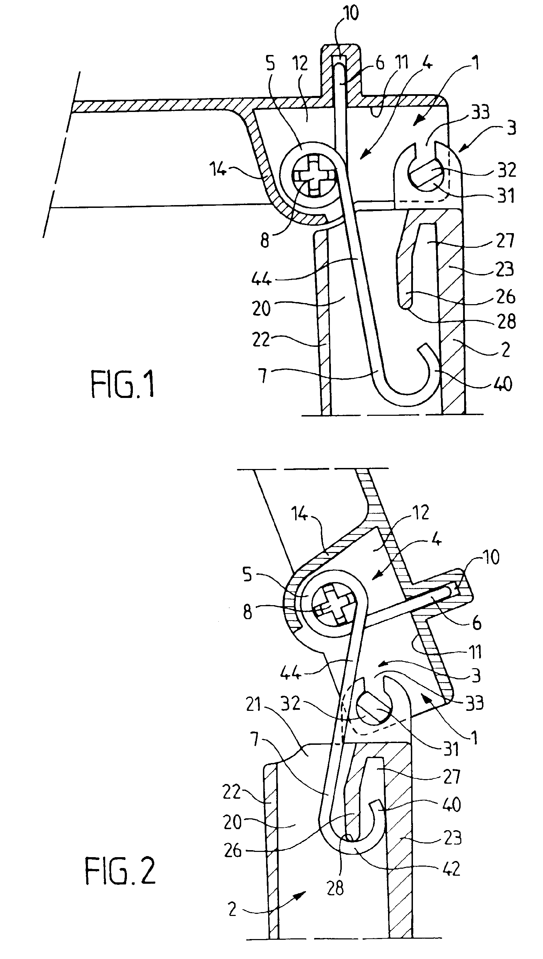

Les figures 1 et 2 montrent l'articulation d'un couvercle 1 sur un corps 2 formant le boîtier de réception d'une cuve d'un appareil électrique de cuisson telle qu'une friteuse ou un cuiseur à riz. Le couvercle 1 est articulé sur le corps 2 au moyen d'une charnière 3.

Un ressort de rappel 4 est associé à la charnière 3. Le ressort 4 comporte une partie hélicoïdale 5 prolongée par deux branches 6, 7. La branche 6 est montée dans le couvercle 1 et la branche 7 est montée sur le corps 2.

Selon l'invention, la partie hélicoïdale 5 du ressort 4 est montée sur un pivot 8 formant un axe de rotation distinct de l'axe de rotation de la charnière 3. Ainsi le pivot 8 et l'axe de la charnière 3 forment deux axes de rotation non coaxiaux.

Tel que montré aux figures 1 et 2, le pivot 8 est solidaire du couvercle 1. Le pivot 8 est issu d'une paroi 12 sensiblement perpendiculaire à la face inférieure 11 du couvercle 1.

L'extrémité libre de la branche 6 est retenue dans une cavité 10 ménagée dans la face inférieure 11 du couvercle 1, tandis que l'extrémité libre de l'autre branche 7 est montée en appui mobile dans un logement 20 du corps 2. Ainsi la branche 6 est fixe, l'extrémité libre de la branche 6 et la partie hélicoïdale 5 formant l'autre extrémité de ladite branche étant montée sur un même support formé par le couvercle 1. A l'opposé, la branche 7 est mobile, l'extrémité libre de la branche 7 et la partie hélicoïdale 5 formant l'autre extrémité de ladite branche étant montées sur deux supports différents articulés par une charnière 3, la partie hélicoïdale 5 étant montée sur le couvercle 1 et l'extrémité libre de la branche 7 venant en appui glissant sur le corps 2.

La charnière 3 est formée par un tenon 31, issu du couvercle 1. Le tenon 31 pivote dans un logement cylindrique 32 ménagé sur le corps 2. Une découpe 33 ménagée en partie supérieure du logement 32 permet l'insertion du tenon 31 selon une direction perpendiculaire à l'axe de rotation de la charnière 3. Le couvercle 1 peut ainsi être mis en place de manière simple sur le corps 2.

Le logement 20 est ménagé en partie supérieure du corps 2 et présente une ouverture supérieure 21. Le logement 20 est délimité par une paroi frontale 22, une paroi de fond 23 ainsi que par des parois latérales et une paroi inférieure. Une nervure 26, présentant une extrémité inférieure libre, est reliée en son extrémité supérieure à la paroi de fond 23 en ménageant un espace 27 avec ladite paroi.

La branche mobile 7 du ressort 4 est terminée par une extrémité libre recourbée 40 formant un moyen d'accrochage 42 susceptible de venir en prise avec l'extrémité libre de la nervure 26, qui forme ainsi une butée 28. L'extrémité recourbée 40 est reliée à la partie hélicoïdale 5 par une partie rectiligne 44. L'ouverture 21 est prévue pour le passage de l'extrémité recourbée 40.

On remarquera sur la figure 1 notamment que la longueur de la branche mobile 7 du ressort 4 est supérieure à la distance entre l'axe du pivot 8 et l'axe de la charnière 3.

On remarquera également sur la figure 1 que l'axe du pivot 8 et l'axe de la charnière 3 sont sensiblement horizontaux lorsque le couvercle est en position abaissée.

On remarquera également sur l'une des figures 1 ou 2 que la paroi 23 sur laquelle s'appuie l'extrémité recourbée 40 de la branche mobile 7 du ressort 4 est disposée selon une direction sensiblement verticale.

On remarquera également sur l'une des figures 1 ou 2 que le pivot 8 et la charnière 3 forment deux axes de rotation sensiblement parallèles.

Le ressort de rappel 4 exerce un couple de rappel tendant à ramener la branche mobile 7 dans le sens de rotation anti-horaire. Lorsque le couvercle est en position relevée, tel que montré à la figure 2, le ressort 4 exerce un couple de rappel résiduel destiné à contrecarrer le poids du couvercle 1. Lorsque le couvercle 1 est en position abaissée, tel que montré à la figure 1, le ressort 4 exerce un couple de rappel plus important.

Le fonctionnement de l'appareil présenté aux figures 1 et 2 est le suivant. Lorsque l'utilisateur libère le moyen de retenue (non montré aux figures) du couvercle 1, la branche mobile 7 du ressort 4 s'appuyant sur la paroi 23 repousse le pivot 8 monté sur le couvercle 1. Le couvercle 1 pivote dans le sens horaire autour de la charnière 3 et la branche mobile 7 glisse le long de la paroi 23 en direction de la charnière 3 jusqu'à ce que l'extrémité recourbée 40 de la branche 7 vienne en prise avec la butée 28.

Grâce à la disposition de la partie hélicoïdale 5 du ressort 4 autour du pivot 8 ménagé sur le couvercle 1 et à la branche mobile 7 glissant le long de la paroi 23 du corps 2, l'effort exercé par le ressort 4 est plus important au début de la course qu'à la fin de la course, ce qui permet d'obtenir un effort de relevage du couvercle 1 important en début de course, tout en limitant l'effet de bascule de l'appareil dû à une trop grande énergie cinétique du couvercle 1 en fin de course.

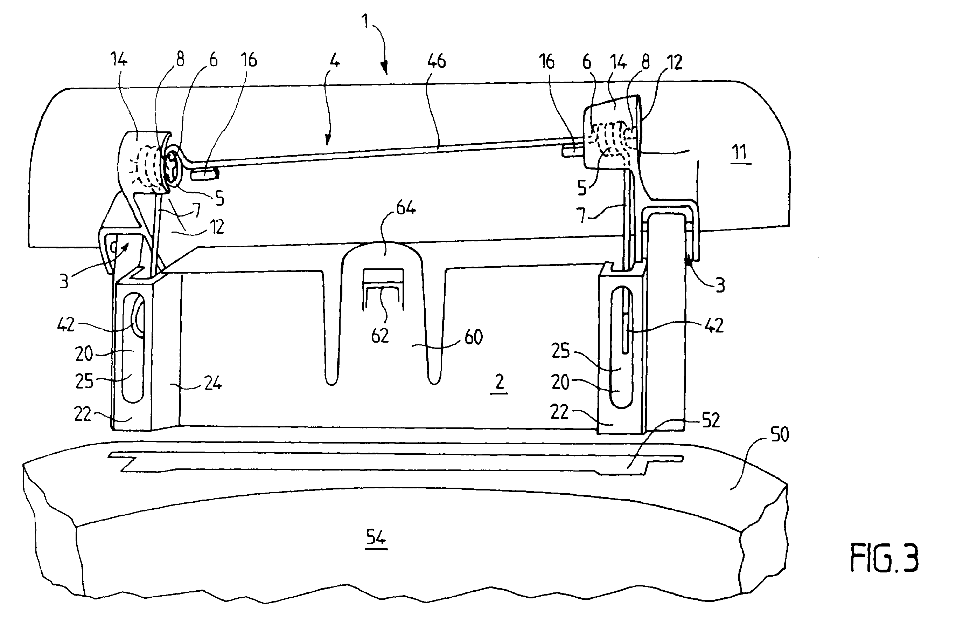

La figure 3 présente une variante de réalisation dans laquelle le ressort 4 comporte deux parties hélicoïdales 5 distantes l'une de l'autre et reliées par un bras de liaison 46 formant les deux branches 6 fixes montées dans le couvercle 1. Deux nervures 16 issues de la face inférieure 11 du couvercle 1 forment des moyens de blocage des branches 6 fixes du ressort 4. Par ailleurs, le logement 20 présente des parois latérales 24 pleines ainsi que des parois frontales 22 présentant une ouverture frontale 25.

Le couvercle 1 est articulé sur le corps 2 au moyen de deux charnières 3. Le corps 2 est une pièce susceptible d'être mise en place dans un logement 52 ménagé dans la paroi supérieure d'un boîtier 50 d'un appareil électrique de cuisson, une enceinte de cuisson 54 étant ménagée dans le boîtier 50. Le corps 2 comporte une languette flexible 60 présentant une nervure 62 prévue pour venir en prise dans une conformation du logement 52. La languette 60 présente un sommet 64 protubérant hors du logement 52 lorsque le corps 2 est en place dans le boîtier 50. Le sommet 64 forme un moyen de préhension permettant de dégager la nervure 62 pour retirer le corps 2 du boîtier 50.

L'ensemble formé par le corps 2 articulé sur le couvercle 1 et comportant le dispositif d'assistance au relevage selon l'invention peut ainsi être retiré du boîtier 50 de l'appareil, par exemple à des fins de nettoyage, sans manipulation fastidieuse.

Le montage du couvercle 1 sur le corps 2 s'effectue de la manière suivante. Le ressort 4 est d'abord mis en place dans le couvercle 1 en fléchissant le bras 46 pour amener les parties hélicoïdales 5 des ressorts 4 en regard des pivots 8. Après relâchement du bras 46 le ressort 4 est maintenu entre les deux pivots 8. Le couvercle 1 est amené en place sur le corps 2 en repoussant les branches mobiles 7 pour introduire lesdites branches dans les logements 20 du corps 2, et en insérant les tenons 31 (montrés aux figures 1 et 2) dans les découpes 33 des logements cylindriques 32. Les extrémités recourbées 40 des branches 7 viennent alors en appui latéral contre les nervures 26 disposées dans les logements 20. Lorsque le couvercle 1 est amené en position abaissée, les extrémités recourbées 40 des branches 7 s'échappent des nervures 26 et viennent en appui contre les parois 23. Lorsque le couvercle est amené en position relevée, les extrémités recourbées 40 formant le moyen d'accrochage 42 viennent en prise sur le sommet des nervures 26 formant les butées 28. Le couvercle 1 est alors assemblé sur le corps 2 de manière durable.

Toutefois, les ouvertures latérales 25 permettent d'accrocher les branches 7 lorsque le couvercle 1 est en position abaissée pour dégager les extrémités recourbées 40 de l'appui sur les parois 23. Lors du relevage du couvercle 1 les extrémités 40 ainsi retenues peuvent venir en appui latéral contre les nervures 26 afin de permettre le démontage du couvercle 1 du corps 2.

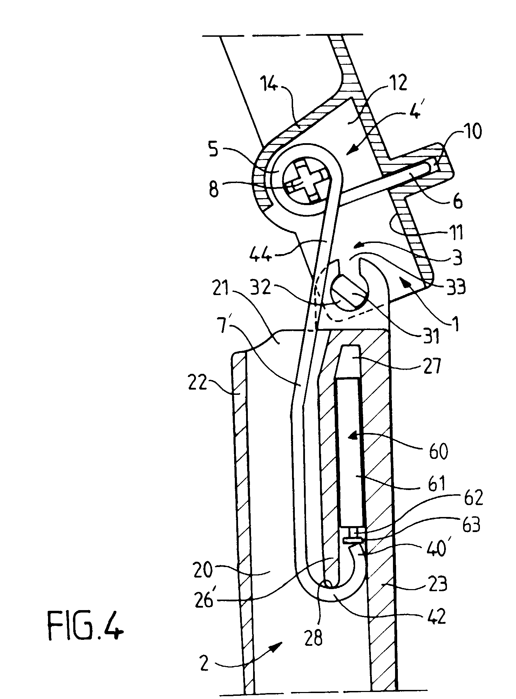

L'exemple de réalisation illustré à la figure 4 diffère de celui illustré aux figures 1 et 2 en ce que la branche mobile 7' du ressort 4' coopère avec un dispositif de freinage 60. Le dispositif de freinage 60 est un frein à graisse comportant un corps 61, monté entre la paroi 23 et la nervure 26', et un piston 62 monté coulissant dans le corps 61. Tel qu'illustré à la figure 4 le piston 62 comporte une tête 63 coopérant avec l'extrémité 40' de la branche mobile 7' du ressort 4'. Le piston 62 coulisse dans le corps 61 contre un moyen de rappel (non montré à la figure 4).

Lorsque le couvercle 1 est en position fermée, le piston 62 est en position sortie, correspondant à la position de repos. L'extrémité 40' de la branche mobile 7' peut ou non être en contact avec la tête 63. Lorsque le couvercle 1 est libéré, l'extrémité 40' ramène le piston 62 en position rentrée dans le corps 61. La vitesse de déplacement de la branche mobile 7' est ainsi limitée, ce qui diminue l'énergie communiquée au couvercle 1 lors du relevage.

De nombreuses améliorations peuvent être apportées à cet appareil dans le cadre des revendications.

A titre de variante, non montrée aux figures, le pivot 8 pourrait être solidaire du corps 2, l'extrémité libre de la branche fixe ou de chacune des branches fixes étant alors montée dans le corps 2, et l'extrémité libre de la branche mobile ou de chacune des branches mobiles étant montée en appui glissant dans un logement du couvercle 1. Une telle variante peut comporter un dispositif de freinage.

A titre de variante, la paroi du logement sur laquelle s'appuie la branche mobile du ressort de rappel peut ne pas être verticale et présenter une certaine inclinaison, constante ou non.

A titre de variante également, la paroi du logement sur laquelle s'appuie la branche mobile du ressort de rappel peut présenter une surface non plane. Une telle surface permet notamment de réaliser des surfaces de came modifiant l'évolution du couple de rappel du ressort 4 de manière plus ou moins prononcée selon la position occupée par le couvercle 1.

A titre de variante, les tenons 31 pourraient être issus du corps 2, les logements cylindriques 32 étant ménagés dans le couvercle 1.

A titre de variante complémentaire, un moyen d'amortissement peut être monté sur la ou les butées 28.

A titre de variante, le dispositif de freinage peut être dépourvu de moyen de rappel. Le piston doit alors être fixé à la branche mobile du ressort pour être entraîné lors du mouvement du ressort.

A titre de variante, le dispositif de freinage peut former la butée limitant la course du couvercle. La butée 28 n'est alors plus nécessaire.

Le dispositif de freinage peut également être formé par un moyen de rappel s'opposant au mouvement de la branche mobile lors du relevage du couvercle.

## Revendications

1. Dispositif d'assistance au relevage d'un couvercle (1) articulé au moyen d'au moins une charnière (3) sur un corps (2) appartenant à un appareil électrique de cuisson, comportant au moins un ressort de rappel (4 ; 4') comprenant une partie hélicoïdale (5) prolongée par une première branche (6) montée dans le couvercle (1) et par une deuxième branche (7; 7') montée dans le corps (2), la partie hélicoïdale (5) étant montée sur un pivot (8) formant un axe de rotation distinct de l'axe de rotation de la charnière (3), le pivot (8) étant solidaire du couvercle (1), respectivement du corps, la branche (7; 7') montée dans le corps (2), respectivement la branche montée dans le couvercle, étant montée en appui mobile, caractérisé en ce que la branche (7) montée mobile dans le corps (2), respectivement dans le couvercle, comporte un moyen d'accrochage (42) prévu pour venir en prise avec une butée (28) ménagée dans le corps (2), respectivement dans le couvercle.

2. Dispositif selon la revendication 1, caractérisé en ce que le pivot (8) et la charnière (3) forment deux axes de rotation sensiblement parallèles.

3. Dispositif selon l'une des revendications 1 ou 2, caractérisé en ce que le corps (2) est une pièce susceptible d'être mise en place de manière amovible dans un logement (52) ménagé dans un boîtier (50) de l'appareil.

4. Dispositif selon l'une des revendications 1 à 3, caractérisé en ce que le ressort (4 ; 4') comporte deux parties hélicoïdales (5) et les branches (6) montées fixes dans le couvercle (1), respectivement dans le corps, se rejoignent pour former un bras de liaison (46).

5. Dispositif selon l'une des revendications 1 à 4, caractérisé en ce que la charnière (3) est formée par un tenon (31) issu du couvercle (1), respectivement du corps, pivotant dans un logement cylindrique (32), une découpe (33) étant prévue dans ledit logement pour l'insertion dudit tenon selon une direction perpendiculaire à l'axe de rotation de ladite charnière.

6. Dispositif selon l'une des revendications 1 à 5, caractérisé en ce que le pivot (8) appartient au couvercle (1) et est issu d'une paroi (12) sensiblement perpendiculaire à la face inférieure (11) du couvercle (1).

7. Dispositif selon l'une des revendications 1 à 6, caractérisé en ce que la branche mobile (7') du ressort (4'), montée mobile dans le corps (2), respectivement dans le couvercle, coopère avec un dispositif de freinage (60), monté dans le corps (2), respectivement dans le couvercle.

8. Dispositif selon la revendication 7, caractérisé en ce que le dispositif de freinage (60) est monté dans le corps (2) entre une paroi (43) et une nervure (26') dont l'extrémité inférieure forme la butée (28).

9. Dispositif selon l'une des revendications 7 ou 8, caractérisé en ce que le dispositif de freinage (60) est formé par un frein à graisse.

10. Appareil électrique de cuisson comportant un couvercle (1) articulé sur un corps (2) au moyen d'une charnière (3), caractérisé en ce qu'il comporte un dispositif d'assistance au relevage du couvercle selon l'une des revendications précédentes.
